# FASCICULE DE BREVET EUROPEEN

(11) **EP 3 818 349 B1**
(45) Date de publication et mention de la délivrance du brevet: **07.08.2024**
(21) Numéro de dépôt: 19733811.4
(22) Date de dépôt: 01.07.2019
(51) Int. Cl.: G01K 11/14

(54) **INDICATEUR DE TEMPÉRATURE**
TEMPERATURINDIKATOR
TEMPERATURE INDICATOR

(30) Priorité: 06.07.2018 FR 1856226
(43) Date de publication de la demande: 12.05.2021
(73) Titulaire: SEB S.A., 69130 Ecully (FR); Centre National de la Recherche Scientifique, 75794 Paris Cedex 16 (FR)
(72) Inventeur: TEISSIER, Anne, 74000 ANNECY (FR); FONTAINE, Michel, 74150 SALES (FR); JOBIC, Stéphane, 44322 NANTES Cedex 03 (FR); JOUTANG, Isabelle, 73290 LA MOTTE SERVOLEX (FR); LEYSOUR DE ROHELLO, Erwan, 77380 COMBS-LA-VILLE (FR); LE BRIS, Stéphanie, 73000 CHAMBERY (FR); WAKU, Jean, 73000 CHAMBERY (FR)
(74) Mandataire: Regimbeau
(86) Numéro de dépôt international: PCT/EP2019/067616
(87) Numéro de publication internationale: WO 2020/007800

(56) Documents cités:
- EP-A1- 1 405 890
- EP-B1- 2 694 601
- FR-A1- 2 784 459
- JP-A- S5 558 268
- US-A- 4 722 510

## Description

La présente invention concerne de manière générale des revêtements comprenant au moins une couche de décor fonctionnel, des compositions de couche de décor fonctionnel, des articles comportant de tels revêtements et compositions ainsi que l'utilisation de tels revêtements et compositions comme indicateur de température.

Par décor fonctionnel, on entend, au sens de la présente invention, un décor permettant de guider l'utilisateur de l'article comprenant le décor dans son utilisation.

Le domaine visé par la présente invention est celui des articles chauffants, et notamment celui des articles de petit équipement ménager chauffants.

Par article chauffant, on entend, au sens de la présente invention, un article dont la température va augmenter pendant son utilisation. Un tel article peut être soit un article qui possède son propre système de chauffage soit un article qui est chauffé par un système de chauffage extérieur. Un tel article est en outre apte à transmettre l'énergie calorifique apportée par le système de chauffage à un matériau ou objet tiers au contact dudit article.

Par article de petit équipement ménager chauffant, on entend, au sens de la présente invention, les articles culinaires et les articles de petit électroménager.

Il est primordial pour un utilisateur de visualiser l'évolution de la température d'un article en cours d'utilisation lorsque ce dernier est soumis à un chauffage. Dans le cas d'un article culinaire, un bon contrôle de la température lors de la cuisson des aliments est nécessaire pour des raisons sanitaires et gustatives (par exemple pour saisir un steak sur un grill ou dans une poêle), mais aussi pour limiter les surchauffes ponctuelles fragilisant le revêtement de l'article culinaire. Un matériel moins surchauffé aura une durée de vie plus longue. Des aliments cuits à plus basse température possèderont des caractéristiques organoleptiques plus saines. De plus, une cuisson réalisée à la température juste nécessaire permet de limiter l'apport d'énergie et donc l'impact environnemental.

On connaît le brevet français FR 1388029 appartenant à la Demanderesse, qui décrit un ustensile de cuisson muni d'un indicateur thermique constitué d'un corps thermosensible changeant de couleur en fonction de la température de manière réversible, cet indicateur thermique étant formulé dans un revêtement antiadhésif, notamment constitué de polytétrafluoroéthylène. Un pigment thermostable peut également être incorporé à l'ustensile de cuisson à titre de témoin pour permettre une appréciation du changement relatif de couleur de l'indicateur thermique, et donc du changement de température. Toutefois, la simple association d'un pigment thermostable et d'un pigment thermosensible ne permet pas de distinguer de façon nette le changement de température.

Pour remédier à ces problèmes, la Demanderesse a ensuite développé un indicateur thermique à base de pigments thermochromes, décrit dans le brevet européen EP 1121576. Cet indicateur thermique est un décor comportant au moins deux motifs, l'un à base d'un pigment thermochrome de type oxyde de fer fonçant avec la montée en température, l'autre à base d'un pigment thermochrome s'éclaircissant avec la montée en température et comportant un mélange de rouge de pérylène et de noir spinelle. Il s'ensuit qu'à une température préétablie on obtient une confusion des couleurs des deux motifs ce qui est un moyen pour l'utilisateur d'identifier cette température préétablie.

L'utilisation simultanée de ces pigments thermochromes dans des zones contiguës d'un décor permet effectivement d'améliorer la perception visuelle du changement de température de la surface de cuisson de l'article culinaire. Toutefois, ce type d'indicateur thermique reste difficilement compréhensible au premier abord pour l'utilisateur car les deux zones présentent chacune une couleur rouge ayant une valeur chromatique proche l'une de l'autre à température ambiante. Par ailleurs, la confusion des couleurs des motifs se produit dans une zone d'amplitude thermique d'au moins 50°C. Il s'ensuit que l'appréciation du changement de température et le confort de la lecture ne sont pas faciles, en particulier pour un public sans formation particulière. De ce fait, les utilisateurs ont alors tendance à négliger l'information apportée par cet indicateur thermique.

Il y a donc un intérêt à ce que l'on puisse proposer un indicateur thermique qui change franchement de couleur et/ou de propriété optique, lors d'une variation de température, en présentant par exemple des couleurs franchement différentes dans le cas d'un indicateur thermique coloré (par exemple, passage du jaune à l'orange).

Des pigments de ce type ont fait l'objet du brevet français FR 2891844 dans lequel des oxydes de CuMoW présentaient des changements de couleur réversibles sous l'effet d'une variation de température et/ou sous l'effet d'une contrainte mécanique, par exemple une pression d'au moins 105 Pa. Toutefois ces oxydes pour lesquels la variation de couleur est la conséquence d'un changement de phase sont particulièrement sensibles à la cyclabilité. C'est ainsi qu'après cinq cycles au plus, on n'arrive plus à retrouver la phase alpha métastable responsable de la coloration verte à basse température. L'intérêt d'un tel pigment à titre d'indicateur thermique coloré est donc nul dans la pratique pour servir pour des usages répétés tels que la cuisson des aliments.

Par ailleurs, on connaît également les semi-conducteurs (SC), dont les propriétés laissent envisager un changement de coloration progressif lors d'une augmentation de la température suivant la séquence blanc->jaune->orange->rouge->noir. Par semi-conducteur (SC) thermochrome, on entend un composé semi-conducteur qui présente un changement de coloration lors d'une élévation de température. Le caractère thermochrome progressif et parfaitement réversible de ces composés semi-conducteurs est lié à la diminution de la largeur de la bande interdite du semi-conducteur à cause de la dilatation du matériau. Dans cette gamme de températures, les changements de coloration des SC restent limités et peu marqués et se limitent aux évolutions suivantes : de jaune pâle à jaune vif (Bi₂O₃), de jaune vif à orangé (BiVO₄), de jaune-orangé à rouge-orange (V₂O₅), de rouge-orangé à rouge très foncé (Fe₂O₃), etc. On voit donc que, même s'il est possible d'atteindre des couleurs différentes du rouge, la perception de l'effet thermochrome reste difficile et peu précise.

Les brevets européens EP 0287336 et EP 1405890 divulguent l'élaboration de mélanges constitués d'un ou plusieurs semi-conducteurs thermochromes et d'un ou plusieurs pigments stables afin d'obtenir des compositions complexes aux propriétés thermochromes accrues. Plus particulièrement, dans le brevet EP 1405890, on associe l'oxyde de bismuth Bi₂O₃ (thermochrome) avec CoAl₂O₄ (thermostable, de couleur bleue), dans un rapport 15:1, les pigments étant liés par un silicate de potassium. Le revêtement contenant ce mélange est bleu à température ambiante et devient orange à 400°C. Cependant la mise en oeuvre de l'oxyde de bismuth n'est pas aisée et il a été mis en évidence une sensibilité aux huiles chaudes conduisant à un noircissement du pigment. JP S55 58268 A, US 4 722 510 A, FR 2 784 459 A1, et EP 2 694 601 A1 divulguent également des revêtements ou couches comprenant des compositions thermochromes.

Afin de remédier aux problèmes des revêtements fonctionnels connus de l'art antérieur, la présente invention vise à proposer à l'utilisateur un revêtement comprenant au moins une couche de décor fonctionnel permettant d'accompagner et de guider l'utilisateur de l'article sur lequel le revêtement en question est déposé.

Ainsi, la présente invention a pour objet un revêtement comprenant au moins une couche de décor fonctionnel, dans lequel :
- la couche de décor comprend une composition thermochrome présentant une variation réversible de propriétés optiques et/ou colorimétriques lorsque le revêtement est soumis, en partie ou en totalité, à une variation de température entre une température froide et une température chaude, la température froide étant comprise entre 0°C et 40°C et la température chaude étant comprise entre 80°C et 400°C, et dans lequel
- la composition thermochrome comprend au moins un composé thermochrome de la famille des halogénures d'argent.

Selon l'invention, la couche de décor fonctionnel comprend en outre au moins une résine fluorocarbonée ou un polymère inorganique ou hybride organique-inorganique synthétisé par voie sol-gel en tant que liant, et le rapport entre la masse sèche de la composition thermochrome et la masse sèche du liant est inférieur à 2,25.

Par composé thermochrome ou pigment thermochrome, on entend, au sens de la présente invention, un composé minéral ou organique qui présente un changement réversible de propriétés optiques et/ou colorimétriques lors d'une élévation ou diminution de température.

Par composition thermochrome, on entend, au sens de la présente invention, une composition qui change de propriétés optiques et/ou colorimétriques en fonction de la température, ce changement étant réversible.

De manière avantageuse, le composé thermochrome peut être sélectionné parmi le bromure d'argent, l'iodure d'argent.

L'utilisation de l'iodure d'argent comme composé thermochrome permet d'obtenir un thermochromisme marqué avec une température de transition franche autour de 147°C. D'autres avantages de ce composé thermochrome sont sa bonne compatibilité avec notamment les résines fluorocarbonées ou les matériaux sol-gel et sa résistance à l'huile ce qui limite le recours à des coques de protection comme par exemple avec les dérivés de l'oxyde de bismuth.

La couche de décor du revêtement selon l'invention comprend une composition thermochrome présentant une variation réversible de propriétés optiques et/ou colorimétriques lorsque le revêtement est soumis, en partie ou en totalité, à une variation de température entre une température froide (comprise entre 0°C et 40°C) et une température chaude (comprise entre 80°C et 400°C).

De manière avantageuse, cette température chaude peut être comprise entre 120°C et 280°C.

Dans la composition thermochrome, le composé thermochrome de la famille des halogénures peut être combiné avec d'autres composés thermochromes et/ou pigments thermostables afin d'étendre la gamme de teintes accessibles, afin d'augmenter la perception du changement de teinte et afin que le rendu final se situe dans une plage de sensibilité de l'œil humain permettant à l'utilisateur d'obtenir un décor à lisibilité encore améliorée.

De manière avantageuse, la composition thermochrome selon l'invention peut comprendre en outre au moins un autre composé thermochrome. Par exemple, ladite composition thermochrome peut comprendre en outre au moins un composé semi-conducteur thermochrome, qui peut être choisi parmi Bi₂O₃, Fe₂O₃, VO₂, V₂O₅, WO₃, CeO₂, In₂O₃, le semi-conducteur pyrochlore Y_{1,84}Ca_{0,16}Ti_{1,84}V_{0,16}O_{1,84}, BiVO₄ et leurs mélanges.

De manière avantageuse, la composition thermochrome selon l'invention peut comprendre en outre au moins un pigment thermostable.

Par pigment thermostable, on entend, au sens de la présente invention, un composé minéral ou organique qui présente un très faible changement de teinte lorsqu'il est soumis à une élévation ou à une diminution de température dans un domaine de températures donné, voire aucun changement de couleur.

De préférence, le piment thermostable peut être choisi parmi le dioxyde de titane, les spinelles, les oxydes de fer, le rouge de pérylène, le violet dioxazine, les oxydes mixtes d'aluminium et de cobalt (tels que l'aluminate de cobalt (CoAl₂O₄)), le noir de carbone, les oxydes de chrome et les oxydes de cuivre, le titanate de chrome, l'antimoine, le titanate de nickel, les silico-aluminates, les pigments inorganiques à structure cristalline en spinelle à base de différents oxydes de métaux et leurs mélanges.

Dans un exemple ne faisant pas partie de l'invention, la couche de décor peut être exempte de liant.

Selon l'invention, la couche de décor comprend outre la composition thermochrome, au moins un liant, de préférence un liant thermostable.

Au sens de la présente invention, un liant thermostable est un liant résistant à au moins 200°C.

Le liant comprend au moins l'un d'une résine fluorocarbonée, et d'un polymère inorganique ou hybride organique-inorganique synthétisé par voie sol-gel.

Le liant peut comprendre au moins un émail, une résine d'accroche, une laque, un tanin condensé.

Avantageusement, ledit liant peut comprendre une résine fluorocarbonée et au moins une résine d'accroche et/ou au moins un tanin condensé.

La résine fluorocarbonée peut être choisie dans le groupe comprenant le polytétrafluoroéthylène (PTFE), les copolymères de tétrafluoroéthylène et de perfluorométhylvinyléther (tels que le MFA), les copolymères de tétrafluoroéthylène et de perfluoropropylvinyléther (tels que le PFA), les copolymères de tétrafluoroéthylène et d'hexafluoropropylène (tels que le FEP) et leurs mélanges.

La résine d'accroche peut être choisie dans le groupe comprenant les polyéthercétones (PEK), les polyétheréthercétones (PEEK), les polyamides imides (PAI), les polyéthers imides (PEI), les polyimides (PI), les polyéthersulfones (PES), les sulfures de polyphénylène (PPS), les polybenzimidazoles (PBI).

Le tanin condensé peut avoir pour motif de base une ou plusieurs unité(s) monomère(s) flavan-3-ols et/ou flavan-3,4-diols et/ou phlorotanins.

Avantageusement, ledit liant peut comprendre un tanin condensé, de préférence ayant pour motif de base une ou plusieurs unité(s) monomère(s) flavan-3-ols et/ou flavan-3,4-diols et/ou phlorotanins.

Avantageusement, ledit liant peut comprendre une composition sol-gel obtenue par hydrolyse d'un précurseur sol-gel de type alcoxyde métallique, par introduction d'eau et d'un catalyseur acide ou basique, puis par condensation.

Le précurseur sol-gel de type alcoxyde métallique peut être choisi dans le groupe comprenant les composés suivants :
- les précurseurs répondant à la formule générale M₁(OR₁)ₙ,
- les précurseurs répondant à la formule générale M₂(OR₂)₍ₙ₋₁₎R_{2'}, et
- les précurseurs répondant à la formule générale M₃(OR₃)₍ₙ₋₂₎(R_{3'})₂, avec :
   - R₁, R₂, R₃ ou R_{3'} désignant un groupement alkyle,
   - R_{2'} désignant un groupement alkyle éventuellement fonctionnalisé ou un groupement phényle éventuellement fonctionnalisé,
   - n étant un nombre entier correspondant à la valence maximale des M₁, M₂ ou M₃,
   - M₁, M₂ ou M₃ désignant un élément choisi parmi Si, Zr, Ti, Sn, Al, Ce, V, Nb, Hf, Mg ou les lanthanides (Ln).

De préférence, le précurseur sol-gel de type alcoxyde métallique peut être un alcoxysilane, qui peut être choisi dans le groupe comprenant le méthyltriméthoxysilane (MTMS), le méthyltriéthoxysilane (MTES), le tétraéthoxysilane (TEOS), le tétraméthoxysilane (TMOS), et le 3-glycidoxypropyltriméthoxysilane (GLYMO), l'aminopropyl-triéthoxysilane (APTES) et leurs mélanges.

Avantageusement, ledit liant peut comprendre un émail qui peut comprendre majoritairement de l'oxyde de silicium et de l'oxyde de titane, mélangés à des fondants choisis parmi les oxydes de fer, les oxydes de vanadium, les oxydes de bore, les oxydes de sodium, les oxydes de potassium.

Avantageusement, ledit liant peut comprendre une laque qui peut être choisie parmi les laques silicone, polyester, silicone-polyester.

Selon l'invention, le rapport entre la masse sèche de la composition thermochrome et la masse sèche du liant est inférieur à 2,25. Avantageusement, le rapport entre la masse sèche de la composition thermochrome et la masse sèche du liant peut être inférieur ou égal à 2, de préférence inférieur ou égal à 1.

Un tel ratio composition thermochrome/liant dans la couche de décor semble avoir un effet significatif sur la stabilité de la teinte de l'iodure d'argent.

Selon un aspect de l'invention, le liant peut comprendre au moins une résine fluorocarbonée.

L'utilisation d'une résine fluorocarbonée, et notamment du PTFE, dans la couche de décor semble avoir un effet protecteur sur le composé thermochrome vis-à-vis des sollicitations telles que la chaleur ou encore l'huile chaude.

Le liant peut comprendre au moins une résine fluorocarbonée et le rapport entre la masse sèche de la composition thermochrome et la masse sèche de la résine fluorocarbonée peut être inférieur à 2,25, de préférence inférieur ou égal à 2, de préférence inférieur ou égal à 1.

Un tel ratio composition thermochrome/résine fluorocarbonée dans la couche de décor semble avoir un effet significatif sur la stabilité de la teinte de l'iodure d'argent.

Par couche, on entend, au sens de la présente invention, une couche continue ou discontinue. Une couche continue (ou appelée également couche monolithique) est un tout unique formant un aplat total recouvrant complètement la surface sur laquelle elle est posée. Une couche discontinue (ou couche non monolithique) peut comprendre plusieurs parties n'étant pas ainsi un tout unique.

De manière avantageuse, la couche de décor selon l'invention peut être continue ou discontinue. Bien entendu, la couche de décor peut présenter toutes formes, telles que des cercles concentriques, des lettres ou des dessins. La couche de décor lorsqu'elle est continue peut recouvrir toute la surface du support.

Le revêtement selon l'invention peut comprendre en outre d'autres couches de décor. Le décor ainsi créé peut comprendre au moins deux motifs. Selon une première variante, l'un des deux motifs renferme un composé chimique qui s'assombrit avec la montée ou la descente en température et l'autre motif renferme un composé chimique qui s'éclaircit avec la montée ou la descente en température. Ainsi, le contraste réalisé entre les deux motifs permet de mieux distinguer le changement de température. Selon une autre variante, l'un des deux motifs comprend au moins un composé thermochrome et l'autre motif comprend au moins un pigment thermostable.

Ces autres couches de décor peuvent comprendre au moins un composé thermochrome et/ou au moins un pigment thermostable, avec ou sans liant.

De manière avantageuse, le revêtement selon la présente invention peut être un revêtement anti-adhésif. Les termes « anti-adhérent » ou « anti-adhésif » sont utilisés indistinctement dans le texte.

De manière avantageuse, le revêtement selon la présente invention peut être thermostable.

Au sens de la présente invention, un revêtement thermostable est un revêtement résistant à au moins 200°C.

De manière avantageuse, le revêtement selon l'invention peut comprendre en outre de la couche de décor fonctionnel :
- au moins une première couche appliquée directement sur le support encore appelée sous-couche ou couche d'accroche ou couche primaire ou primaire. Il est préférable que cette couche soit bien adhérente au support et apporte toutes ses propriétés mécaniques au revêtement (comme par exemple, dureté, résistance à la rayure), et/ou
- au moins une couche de surface continue et transparente encore appelée couche de finition ou finish, cette couche laissant une visibilité parfaite de la couche de décor fonctionnel tout en la protégeant de l'abrasion. Cette couche peut également conférer au revêtement ses propriétés anti-adhérentes.

Le revêtement selon l'invention peut être un revêtement organo-minéral ou un revêtement entièrement minéral.

Par revêtement organo-minéral, on entend, au sens de la présente invention, un revêtement dont le réseau est essentiellement inorganique, mais qui comporte des groupements organiques, notamment en raison des précurseurs utilisés et de la température de cuisson du revêtement ou en raison de l'incorporation de charges organiques.

Par revêtement entièrement minéral, on entend, au sens de la présente invention, un revêtement constitué d'un matériau entièrement inorganique, exempt de tout groupement organique. Un tel revêtement peut être obtenu par voie sol-gel avec une température de cuisson d'au moins 400°C, ou à partir de précurseurs de type tétraéthoxysilane (TEOS) avec une température de cuisson qui peut être inférieure à 400°C.

Il est envisagé que ledit liant soit présent soit dans la sous-couche, soit dans la couche de décor fonctionnel, soit dans la couche de finition, soit dans les 3 couches, soit dans 2 couches sur les 3.

Il est préférable que ces différentes couches (donc leurs liants respectifs) soient compatibles entre elles. Mais il n'est pas indispensable que les liants soient identiques dans toutes les couches. Ainsi, il est possible d'avoir un liant de type résine silicone dans la couche de décor fonctionnel, tandis que le liant de la sous-couche et/ou de la couche de finition est un matériau sol-gel.

La présente invention a encore pour objet une composition de couche de décor fonctionnel comprenant :
- une composition thermochrome présentant une variation réversible de propriétés optiques et/ou colorimétriques lorsque la composition de couche de décor est soumise, en partie ou en totalité, à une variation de température entre une température froide et une température chaude, la température froide étant comprise entre 0°C et 40°C et la température chaude étant comprise entre 80°C et 400°C, et comprenant au moins un composé thermochrome de la famille des halogénures d'argent et
- au moins une résine fluorocarbonée ou un polymère inorganique ou hybride organique-inorganique synthétisé par sol-gel en tant que liant Selon l'invention, le rapport entre la masse sèche de la composition thermochrome et la masse sèche du liant est inférieur à 2,25.

Le composé thermochrome, la température chaude, l'autre composé thermochrome, le pigment thermostable, le liant de la composition de couche de décor selon l'invention sont tels que définis en référence au revêtement selon l'invention Selon un aspect de l'invention, le liant de la composition de couche de décor selon l'invention comprend au moins une résine fluorocarbonée.

De manière avantageuse, le rapport entre la masse sèche de la composition thermochrome et la masse sèche du liant peut être inférieur ou égal à 2, de préférence inférieur ou égal à 1.

Le liant peut comprendre au moins une résine fluorocarbonée et le rapport entre la masse sèche de la composition thermochrome et la masse sèche de la résine fluorocarbonée peut être inférieur à 2,25, de préférence inférieur ou égal à 2, de préférence inférieur ou égal à 1.

Dans un mode de réalisation, un article comprend au moins un revêtement selon l'invention ou au moins une composition de couche de décor fonctionnel selon l'invention.

De manière avantageuse, l'article peut comprendre un support présentant deux faces opposées, dont l'une au moins est recouverte d'un revêtement selon l'invention.

On peut envisager différents types d'article de petit équipement ménager chauffants conformes à la présente invention, de différentes formes et réalisés dans différents matériaux.

Ainsi, le support peut être choisi selon les conditions d'usage et de traitement thermique nécessaires parmi les supports en matériau métallique, les supports en verre, les supports en céramique, les supports en terre cuite, les supports en plastique.

A titre de supports métalliques utilisables dans la présente invention, on peut avantageusement citer les supports en aluminium anodisé ou non, éventuellement poli, brossé, sablé, grenaillé ou microbillé, les supports en alliage d'aluminium anodisé ou non, éventuellement poli, brossé, sablé ou microbillé, les supports en acier éventuellement poli, brossé, sablé, grenaillé ou microbillé, les supports en acier inoxydable éventuellement poli, brossé, sablé ou microbillé, les supports en fonte d'acier, d'aluminium ou de fer, les supports en cuivre éventuellement martelé ou poli.

Avantageusement, le support peut être choisi parmi les supports comprenant les couches acier inoxydable ferritique/aluminium/acier inoxydable austénitique, les supports comprenant les couches acier inoxydable/aluminium/cuivre/aluminium/acier inoxydable austénitique, les calottes en aluminium de fonderie, en aluminium ou en alliages d'aluminium doublées d'un fond extérieur en acier inoxydable, les supports colaminés métalliques, par exemples les supports colaminés bicouches comprenant une couche en acier inoxydable (par exemple destinée à constituer la face intérieure de l'article) et une couche en aluminium ou en alliage d'aluminium, anodisé ou non (par exemple destinée à constituer la face extérieure de l'article).

De manière avantageuse, l'article peut être un article chauffant, et notamment un article de petit équipement ménager chauffant.

L'article de petit équipement ménager chauffant selon la présente invention peut notamment être un article culinaire ou un article de petit électroménager tel qu'un fer à repasser, un article pour le soin du cheveu, un pot isotherme (par exemple pour cafetière) ou un bol mixeur.

L'article de petit équipement ménager chauffant selon la présente invention peut notamment être un article culinaire, et en particulier un article culinaire dont l'une des deux faces opposées du support est une face intérieure, éventuellement concave, destinée à être disposée du côté d'aliments susceptibles d'être introduits dans ou sur ledit article, et dont l'autre face du support est une face extérieure, éventuellement convexe, destinée à être disposée vers une source de chaleur.

A titre d'exemples non limitatifs d'articles culinaires conformes à la présente invention, on citera notamment des articles culinaires tels que les casseroles et les poêles, les woks et les sauteuses, les fait-tout et les marmites, les crêpières, les gaufriers, les grills, les moules et plaques pour la pâtisserie, les planchas, les plaques et grilles de barbecue, les appareils à raclette ou à fondue, les cuiseurs à riz, les confituriers, les cuves de machines à pain, les bols de préparation.

L'article de petit équipement ménager chauffant selon la présente invention peut notamment être un fer à repasser, tel qu'un fer à vapeur ou une centrale vapeur, et le support revêtu selon la présente invention est la semelle du fer à repasser.

L'article de petit équipement ménager chauffant selon la présente invention peut notamment être un article pour le soin du cheveu, tel qu'un fer à friser ou fer à lisser, et le support revêtu selon la présente invention est une des plaques chauffantes de l'article pour le soin du cheveu.

La présente invention a encore pour objet une utilisation du revêtement selon la présente invention, ou de la composition de couche de décor fonctionnel selon la présente invention, comme indicateur de température, en particulier dans un article chauffant.

Un procédé de préparation d'un revêtement selon l'invention sur l'une au moins des faces d'un support peut comprendre les étapes suivantes :
a) réalisation de la composition thermochrome comprenant le composé thermochrome de la famille des halogénures d'argent ;
b) réalisation d'une composition de couche de décor fonctionnel comprenant la composition thermochrome ;
c) application de la composition de couche de décor sur la face du support pour former une couche de décor fonctionnel ; et
d) cuisson.

Le procédé ne fait pas partie de l'invention. Selon l'invention, la composition de couche de décor fonctionnel comprend au moins un liant, de préférence un liant thermostable.

Avantageusement, le procédé de préparation d'un revêtement selon la présente invention peut comprendre en outre l'application d'au moins une couche de finition sur la couche de décor entre les étapes c) et d).

De manière avantageuse, la face du support, sur laquelle est appliquée la composition de couche décor à l'étape c), peut avoir été préalablement revêtue d'au moins une sous-couche.

La couche de décor peut être appliquée sur le support par toute méthode appropriée connue de l'homme du métier, et notamment par sérigraphie, par pulvérisation, au rouleau, par tampographie, au rideau, par impression digitale.

Par impression digitale, on entend, au sens de la présente invention, une impression réalisée directement à partir de données informatiques en flux continu entre un ordinateur et la machine imprimante.

Avantageusement l'impression digitale du revêtement thermostable selon la présente invention est réalisée par un procédé jet d'encre.

D'autres avantages et particularités de la présente invention résulteront de la description qui va suivre, donnée à titre d'exemple non limitatif et faite en référence aux figures annexées :
[Fig. 1] est une vue schématique en coupe d'un exemple de réalisation d'une poêle selon l'invention ;
[Fig. 2] est une vue schématique en coupe de la poêle de la figure 1 munie d'un exemple de revêtement monocouche selon l'invention ; et
[Fig. 3] est une vue schématique en coupe de la poêle de la figure 1 munie d'un exemple de revêtement multicouche selon l'invention.

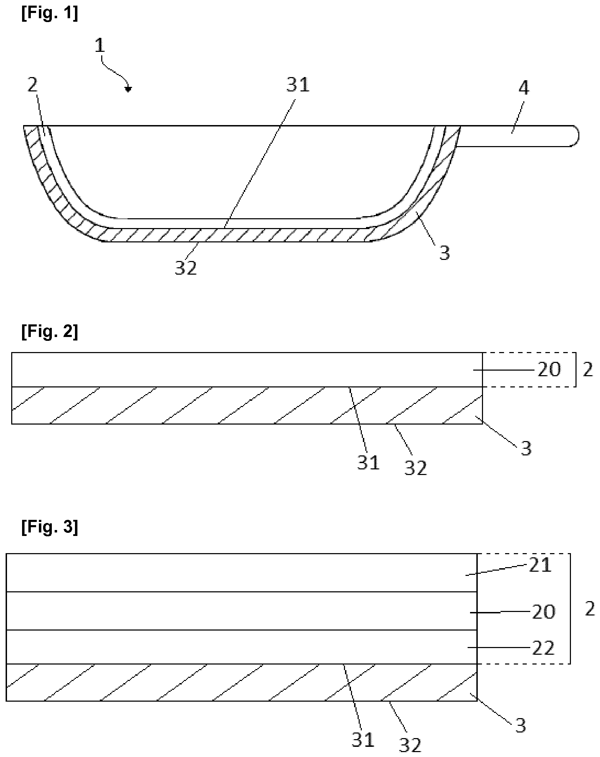

Sur la figure 1, on a représenté, à titre d'exemple d'article culinaire selon l'invention, une poêle 1 qui comprend un support 3 se présentant sous la forme d'une calotte creuse munie d'une poignée de préhension 4. Le support 3 comprend une face intérieure 31 qui est la face orientée du côté des aliments susceptibles d'être reçus dans la poêle 1, et une face extérieure 32 qui est destinée à être disposée vers une source de chaleur extérieure. Le support 3 comprend, sur sa face intérieure 31, un revêtement 2 selon l'invention.

La figure 2 représente une vue schématique en coupe de la poêle de la figure 1 munie d'un exemple de revêtement 2 monocouche selon l'invention. Le revêtement 2 comprend une couche de décor 20 comprenant au moins un composé thermochrome de la famille des halogénures d'argent.

La figure 3 représente une vue schématique en coupe de la poêle de la figure 1 munie d'un exemple de revêtement 2 multicouche selon l'invention. Le revêtement 2 comprend une sous-couche 22, une couche de finition 21 et une couche de décor 20 comprenant au moins un composé thermochrome de la famille des halogénures d'argent.

L'invention est illustrée plus en détail dans les exemples suivants.

### EXEMPLES

### Exemple 1 : Préparation d'une composition de couche de décor à base d'Agl sans liant thermostable

Une composition de couche de décor comprenant Agl sans liant thermostable est réalisée à partir des composants détaillés ci-dessous.

| **Composants** | **Masses (g)** |
|---|---|
| Eau | 52,73 |
| Agl | 30,64 |
| Épaississant | 4,90 |
| Ajusteur de pH | 0,69 |
| Solvant | 11,04 |

Une pâte de décor est tout d'abord préparée en dispersant l'Agl dans l'eau.

Puis la composition de couche de décor est préparée en mélangeant ladite pâte de décor avec les autres composants.

### Exemple 2 : Préparation d'une composition de couche de décor à base d'Agl sans liant thermostable

Une composition de couche de décor comprenant Agl sans liant thermostable est réalisée à partir des composants détaillés ci-dessous.

| **Composants** | **Masses (g)** |
|---|---|
| Eau | 50,0 |
| Agl | 37,5 |
| Épaississant | 5 |
| Ajusteur de pH | 0,5 |
| Solvant | 7 |

Une pâte de décor est tout d'abord préparée en dispersant l'Agl dans l'eau.

Puis la composition de couche de décor est préparée en mélangeant ladite pâte de décor avec les autres composants.

### Exemple 3 : Préparation d'une composition de couche de décor à base d'Agl et d'un liant thermostable

Une composition de couche de décor comprenant Agl ainsi qu'un liant thermostable, le PTFE, est réalisée à partir des composants détaillés ci-dessous.

| **Composants** | **Masses (g)** |
|---|---|
| Dispersion aqueuse de PTFE (60% extrait sec en masse) | 59,06 |
| Agl | 23,62 |
| Epaississant | 2,19 |
| Eau | 3,13 |
| Ajusteur de pH | 0,48 |
| Solvant | 11,22 |
| Antimousse | 0,30 |

Une pâte de décor est tout d'abord préparée en dispersant l'Agl dans l'eau.

Puis la composition de couche de décor est préparée en mélangeant ladite pâte de décor avec les autres composants.

### Exemple 4 : Préparation de revêtements à base de résine fluorocarbonée comprenant au moins une couche de décor comprenant Agi

Différentes compositions de couche de décor ont été formulées. Ces compositions ont une formulation de base commune comprenant notamment un solvant, de l'eau et des épaississants. De l'Agl et du PTFE ont été ajoutés à cette formulation de base dans des proportions respectives qui sont détaillées ci-dessous. Les compositions de couche de décor sont obtenues en dispersant tout d'abord l'Agl dans l'eau, puis en mélangeant la pâte obtenue avec les autres composants.

| | **Sans PTFE** | **PTFE taux 1** | **PTFE taux 2** | **PTFE taux 3** |
|---|---|---|---|---|
| Agl (masse sèche en g) | 10 | 10 | 10 | 10 |
| PTFE (masse sèche en g) | 0 | 4,41 | 9,68 | 25,78 |
| **Ratio Agl/PTFE** | **n/a** | **2,27** | **1,03** | **0,39** |

Chacune de ces compositions a été appliquée par tampographie en une ou trois ou cinq couches sur un primaire à base de PTFE disposé sur un support.

Un finish transparent à base de PTFE a ensuite été déposé et le revêtement a été cuit à 430°C pendant 11 minutes.

Les revêtements obtenus présentent un décor de couleur vert-de-gris à température ambiante (20°C) sur fond noir (correspondant à la sous-couche). Les revêtements pour lesquels les compositions de couche de décor ont été déposées en une seule couche présentent un décor de couleur vert-de-gris plus pâle que les revêtements pour lesquels les compositions de couche de décor ont été déposées en plusieurs couches.

Différents tests de vieillissement ont été réalisés sur les revêtements obtenus.

Test du changement de couleur : les échantillons revêtus ont été chauffés jusqu'à 250°C. Une variation progressive de la couleur du décor, de la couleur vert-de-gris initiale à une couleur jaune/orange, a été observée pendant le chauffage, les propriétés colorimétriques du fond noir ne variant pas. Le contraste du changement de couleur est plus marqué lorsque le décor comprend du PTFE. On a laissé refroidir les échantillons jusqu'à la température ambiante ; une variation progressive de la couleur du décor, de la couleur jaune/orange à la couleur vert-de-gris initiale, a été observée pendant le refroidissement, les propriétés colorimétriques du fond noir ne variant pas.

Test à l'huile d'arachide 250°C : les échantillons ont été immergés durant quinze heures dans de l'huile d'arachide à 250°C. L'aspect des zones tampographiées a été observé avant et après le test. Un jaunissement net des zones tampographiées a été observé sur les configurations en trois et cinq couches. En outre, un encrassement spécifique a été observé sur les configurations en trois et cinq couches sur les zones tampographiées ne comportant pas de PTFE et le taux 1 de PTFE (ratio Agl/PTFE = 2,27). Les compositions de couche de décor comportant un ratio Agl/PTFE<2,27 semblent être préservées de l'encrassement.

Test à l'eau à 82°C : les échantillons ont été immergés durant quarante-huit heures dans de l'eau à 82°C. L'aspect des zones tampographiées a été observé avant et après le test. Un blanchiment hétérogène a été observé sur les configurations sans PTFE et le taux 1 de PTFE (ratio Agl/PTFE = 2,27). Les compositions de couche de décor comportant un ratio Agl/PTFE<2,27 semblent être préservées de cet effet et la teinte des zones tampographiées correspondantes reste homogène et sans défaut.

## Revendications

1. Revêtement (2) comprenant au moins une couche de décor fonctionnel (20), **caractérisé en ce que**
- la couche de décor (20) comprend :
- une composition thermochrome présentant une variation réversible de propriétés optiques et/ou colorimétriques lorsque le revêtement (2) est soumis, en partie ou en totalité, à une variation de température entre une température froide et une température chaude, la température froide étant comprise entre 0°C et 40°C et la température chaude étant comprise entre 80°C et 400°C, et **en ce que**
- la composition thermochrome comprend au moins un composé thermochrome de la famille des halogénures d'argent ; **caractérisé en ce que**
- la couche de décor fonctionnel comprend en outre une résine fluorocarbonée ou un polymère inorganique ou hybride organique-inorganique synthétisé par voie sol-gel en tant que liant, et
- le rapport entre la masse sèche de la composition thermochrome et la masse sèche du liant est inférieur à 2,25.

2. Revêtement (2) selon la revendication 1, dans lequel le composé thermochrome est sélectionné parmi le bromure d'argent, l'iodure d'argent.

3. Revêtement (2) selon l'une quelconque des revendications précédentes, dans lequel la température chaude est comprise entre 120°C et 280°C.

4. Revêtement (2) selon l'une quelconque des revendications précédentes, dans lequel la composition thermochrome comprend en outre au moins un autre composé thermochrome et/ou au moins un pigment thermostable.

5. Composition de couche de décor fonctionnel (20) comprenant :
- une composition thermochrome présentant une variation réversible de propriétés optiques et/ou colorimétriques lorsque la composition de couche de décor fonctionnel est soumise, en partie ou en totalité, à une variation de température entre une température froide et une température chaude, la température froide étant comprise entre 0°C et 40°C et la température chaude étant comprise entre 80°C et 400°C, et comprenant au moins un composé thermochrome de la famille des halogénures d'argent ; **caractérisée en ce que** la composition de couche de décor fonctionnel comprend en outre
- au moins une résine fluorocarbonée ou un polymère inorganique ou hybride organique-inorganique synthétisé par voie sol-gel en tant que liant,
et **en ce que** le rapport entre la masse sèche de la composition thermochrome et la masse sèche du liant est inférieur à 2,25.

6. Composition de couche de décor fonctionnel selon la revendication 5, dans laquelle le composé thermochrome est sélectionné parmi le bromure d'argent, l'iodure d'argent.

7. Composition de couche de décor fonctionnel selon l'une quelconque des revendications 5 et 6, dans laquelle la température chaude est comprise entre 120°C et 280°C.

8. Composition de couche de décor fonctionnel selon l'une quelconque des revendications 5 à 7, dans laquelle la composition thermochrome comprend en outre au moins un autre composé thermochrome et/ou au moins un pigment thermostable.

9. Article comprenant au moins un revêtement selon l'une quelconque des revendications 1 à 4 ou au moins une composition de couche de décor fonctionnel selon l'une quelconque des revendications 5 à 8.

10. Utilisation du revêtement (2) selon l'une quelconque des revendications 1 à 4, ou de la composition de couche de décor fonctionnel selon l'une quelconque des revendications 5 à 8, comme indicateur de température.

## Patentansprüche

1. Beschichtung (2) umfassend mindestens eine funktionale Dekorschicht (20), **dadurch gekennzeichnet, dass**
- die Dekorschicht (20) umfasst:
- eine thermochrome Zusammensetzung mit einer reversiblen Änderung der optischen und/oder kolorimetrischen Eigenschaften, wenn die Beschichtung (2) teilweise oder vollständig einer Temperaturänderung zwischen einer kalten und einer warmen Temperatur ausgesetzt wird, wobei die kalte Temperatur zwischen 0 °C und 40 °C und die warme Temperatur zwischen 80 °C und 400 °C liegt, und **dadurch gekennzeichnet, dass**
- die thermochrome Zusammensetzung wenigstens eine thermochrome Verbindung der Familie der Silberhalogenide umfasst; **dadurch gekennzeichnet, dass** die funktionale Dekorschicht ferner ein Fluorkohlenstoffharz oder ein anorganisches oder organisch-anorganisches Hybridpolymer umfasst, das als Bindemittel Sol-Gel-synthetisiert wird,
und
- das Verhältnis zwischen der Trockenmasse der thermochromen Zusammensetzung und der Trockenmasse des Bindemittels kleiner als 2,25 ist.

2. Beschichtung (2) nach Anspruch 1, wobei die thermochrome Verbindung unter Silberbromid, Silberiodid ausgewählt wird.

3. Beschichtung (2) nach einem der vorhergehenden Ansprüche, wobei die warme Temperatur zwischen 120 °C und 280 °C liegt.

4. Beschichtung (2) nach einem der vorhergehenden Ansprüche, wobei die thermochrome Zusammensetzung ferner wenigstens eine weitere thermochrome Verbindung und/oder wenigstens ein thermostabiles Pigment umfasst.

5. Zusammensetzung einer funktionalen Dekorschicht (20) umfassend:
- eine thermochrome Zusammensetzung mit einer reversiblen Änderung der optischen und/oder kolorimetrischen Eigenschaften, wenn die Zusammensetzung der funktionalen Dekorschicht teilweise oder vollständig einer Temperaturänderung zwischen einer kalten und einer warmen Temperatur ausgesetzt wird, wobei die kalte Temperatur zwischen 0 °C und 40 °C und die warme Temperatur zwischen 80 °C und 400 °C liegt und mindestens eine thermochrome Verbindung der Silberhalogenidfamilie umfasst; **dadurch gekennzeichnet, dass** die Zusammensetzung der funktionalen Dekorschicht ferner umfasst
- wenigstens ein Fluorkohlenstoffharz oder ein anorganisches oder organisch-anorganisches Hybridpolymer, das als Bindemittel Sol-Gel-synthetisiert wird, und wobei das Verhältnis zwischen der Trockenmasse der thermochromen Zusammensetzung und der Trockenmasse des Bindemittels kleiner als 2,25 ist.

6. Zusammensetzung einer funktionalen Dekorschicht nach Anspruch 5, wobei die thermochrome Verbindung aus Silberbromid, Silberiodid ausgewählt wird.

7. Zusammensetzung einer funktionalen Dekorschicht nach einem der Ansprüche 5 und 6, wobei die warme Temperatur zwischen 120 °C und 280 °C liegt.

8. Zusammensetzung einer funktionalen Dekorschicht nach einem der Ansprüche 5 und 7, wobei die thermochrome Zusammensetzung ferner wenigstens eine weitere thermochrome Verbindung und/oder wenigstens ein thermostabiles Pigment umfasst.

9. Artikel, der wenigstens eine Beschichtung nach einem der Ansprüche 1 bis 4 oder wenigstens eine Zusammensetzung einer funktionalen Dekorschicht nach einem der Ansprüche 5 bis 8 umfasst.

10. Verwendung der Beschichtung (2) nach einem der Ansprüche 1 bis 4 oder der Zusammensetzung der funktionalen Dekorschicht nach einem der Ansprüche 5 bis 8 als Temperaturindikator.

## Claims

1. A coating (2) comprising at least one functional decoration layer (20), **characterised in that**
- the decoration layer (20) comprises:
- a thermochromic composition having a reversible variation in optical and/or colorimetric properties when the coating (2) is subjected, in part or in whole, to a temperature variation between a cold temperature and a hot temperature, the cold temperature being between 0°C and 40°C and the hot temperature being between 80°C and 400°C, and **in that**
- the thermochromic composition comprises at least one thermochromic compound of the silver halide family; **characterised in that** the functional decoration layer further comprises a fluorocarbon resin or an inorganic or organic-inorganic hybrid polymer synthesised by sol-gel as a binder,
and
- the ratio of the dry mass of the thermochromic composition to the dry mass of the binder is less than 2.25.

2. The coating (2) according to claim 1, wherein the thermochromic compound is selected from silver bromide, silver iodide.

3. The coating (2) according to any of the preceding claims, wherein the hot temperature is between 120°C and 280°C.

4. The coating (2) according to any of the preceding claims, wherein the thermochromic composition further comprises at least one other thermochromic compound and/or at least one thermostable pigment.

5. A composition for a functional decoration layer (20) comprising:
- a thermochromic composition having a reversible variation in optical and/or colorimetric properties when the composition for a functional decoration layer is subjected, in part or in whole, to a temperature variation between a cold temperature and a hot temperature, the cold temperature being between 0°C and 40°C and the hot temperature being between 80°C and 400°C and comprising at least one thermochromic compound of the silver halide family; **characterised in that** the composition for a functional decoration layer further comprises
- at least one fluorocarbon resin or an inorganic or organic-inorganic hybrid polymer synthesised by sol-gel as a binder, and **in that** the ratio of the dry mass of the thermochromic composition to the dry mass of the binder is less than 2.25.

6. The composition for a functional decoration layer according to claim 5, wherein the thermochromic compound is selected from silver bromide, silver iodide.

7. The composition for a functional decoration layer according to any of claims 5 to 6, wherein the hot temperature is between 120°C and 280°C.

8. The composition for a functional decoration layer according to any of claims 5 to 7, wherein the thermochromic composition further comprises at least one other thermochromic compound and/or at least one thermostable pigment.

9. An item comprising at least one coating according to any of claims 1 to 4 or at least one composition for a functional decoration layer according to any of claims 5 to 8.

10. A use of the coating (2) according to any of claims 1 to 4, or of the composition for a functional decoration layer according to any of claims 5 to 8, as a temperature indicator.
